# EUROPÄISCHE PATENTSCHRIFT

(11) **EP 1 080 861 B1**
(45) Veröffentlichungstag und Bekanntmachung des Hinweises auf die Patenterteilung: **10.12.2003**
(21) Anmeldenummer: 00117592.6
(22) Anmeldetag: 16.08.2000
(51) Int. Cl.: B29C 45/26, B29C 45/36, B29C 33/00

(54) **Formwerkzeug zur Herstellung von Kabeldurchführungen, insbesondere für Roboter**
Mould for manufacturing cable feedthroughs, in particular for robots
Moule pour la fabrication de traversées de câble, notamment pour robots

(30) Priorität: 21.08.1999 DE 29914692 U
(43) Veröffentlichungstag der Anmeldung: 07.03.2001
(73) Patentinhaber: KUKA Roboter GmbH, 86165 Augsburg (DE)
(72) Erfinder: Karlinger, Stefan, 86199 Augsburg (DE)
(74) Vertreter: Lempert, Jost, Dipl.-Phys. Dr. rer.nat.

(56) Entgegenhaltungen:
- WO-A-86/06316
- US-A- 3 272 904
- US-A- 5 780 079

## Beschreibung

Die Erfindung betrifft ein Formwerkzeug zur Herstellung von Formteilen nach dem Oberbegriff des Anspruchs 1.

Die US 5 780 079 zeigt eine Vorrichtung zum Gießen eines Verbinders. Die Vorrichtung weist ein Gehäuse mit einem Kernblock auf, der mit mehreren Stiften versehen ist, die dazu dienen, in dem zu gießenden Verbinder Durchführungsöffnungen auszubilden. Zum Entfernen des gegossenen Verbinders ist der Einsatz seitlich, in axialer Richtung der Stifte aus dem Gehäuse entfernbar. Mit diesem bekannten Formwerkzeug kann immer nur der gleiche in identischer Weise ausgebildete Verbinder gegossen werden.

Die US 3 272 904 zeigt ein Verfahren zur Herstellung eines Dichtungsglieds mit einem vorgefertigten Metallformteil. Ein Werkzeug weist hierzu eine Form auf, die in einer Ausnehmung einen fest eingesetzten Stift aufweist, wobei in die Ausnehmung zunächst das Formteil eingesetzt wird, auf welches der Dichtungsring zu gießen ist und dieser dann gegossen wird.

Weiterhin sind Kabeldurchführungen mit Durchführungsöffnungen zum Befestigen von Kabeln, Leitungen, Schläuchen oder dergleichen bekannt. Sie dienen insbesondere zur Kabelführung zwischen relativ zueinander beweglichen Teilen, insbesondere zwischen beweglichen Teilen von Robotern, beispielsweise Industrierobotern. Hierbei sind zum Beispiel einzelne Kabel oder Kabelbündel in den Durchführungsöffnungen fixierbar und in einer vorgegebenen und konstanten Anordnung führbar. Sie sind somit gegen Verdrillen gesichert. Solche Kabeldurchführungen bestehen in der Regel aus einem weichen Kunststoff, zum Beispiel Polyethylen (PE), Polypropylen (PP), Polyvinylchlorid (PVC), insbesondere Weich-PVC, oder dergleichen, welcher hinreichend elastisch komprimierbar ist, um ein formschlüssiges Befestigen von Kabeln, Leitungen oder Schläuchen in den Durchführungsöffnungen zu gewährleisten.

Eine als Dichteinheit ausgebildete, von einem Gehäuse aufgenommene Kabeldurchführung mit in ihrem Randbereich angeordneten Durchführungsöffnungen ist z.B. der DE 297 17 440 entnehmbar. Die Durchführungsöffnungen sind über Schlitze mit der seitlichen Außenfläche der Kabeldurchführung verbunden, wobei durch das elastisch komprimierbare, weiche Kunststoffmaterial der Kabeldurchführung die zum Einführen und zur Entnahme der Kabel dienenden Schlitze im wesentlichen selbstschließend sind, so daß eine formschlüssige Verbindung der Kabel mit der Kabeldurchführung gegeben ist. Durch die Schlitze können Kabel, Leitungen oder Schläuche im fertig konfektionierten Zustand, z.B. mit bereits applizierten Steckern oder fest angeschlossenen Geräten, von außen in den Durchführungsöffnungen angeordnet werden, ohne daß ein Durchstecken durch dieselben erforderlich ist.

Die Herstellung derartiger Kabeldurchführungen erfolgt in der Regel mittels Formwerkzeugen, im Falle eines Einsatzes thermoplastischer Kunststoffe insbesondere mittels Gießformen, wie Spritzgießformen, indem ein plastifizierter Thermoplast oder ein Polymer-Blend aus plastifizierten Thermoplasten über einen Schmelzekanal in die Spritzgießform injiziert und die Schmelze in der Form ausgehärtet wird. In einer Formmulde des Formwerkzeugs sind Stifte angeordnet, die für die Ausbildung der Durchführungsöffnungen in fest vorgegebener Anordnung, Anzahl und Größe sorgen. Nachteilig ist, daß die Herstellung verschiedener Kabeldurchführungen, z.B. an verschiedene Einsatzzwecke angepaßter Kabeldurchführungen mit Durchführungsöffnungen unterschiedlichen Querschnitts, jeweils verschiedene Formwerkzeuge erfordert, was mit hohen Herstellungs- und Lagerkosten verbunden ist.

Der Erfindung liegt daher die Aufgabe zugrunde, ein Formwerkzeug zur Herstellung von Kabeldurchführungen als Formteile weiterzubilden, die insbesondere die Herstellung von Kabeldurchführungen mit veränderbarem Querschnitt der Durchführungsöffnungen ermöglicht.

Erfindungsgemäß wird diese Aufgabe bei einem Formewerkzeug der eingangs genannten Art durch die kennzeichnenden Merkmale des Anspruchs 1 gelöst.

Bei dem erfindungsgemäß ausgebildeten Formwerkzeug ist also lediglich die Umfangskontur der Kabeldurchführung durch die Kontur der Formmulde des Formwerkzeugs fest vorgegeben, während zur Erzeugung der Durchführungsöffnungen mehrere, austauschbar in dem Formwerkzeug anordbare Stifte vorgese-hen sind, die je nach gewünschter Form und Größe der Durchführungsöffnungen unterschiedliche Querschnitte aufweisen können. Derart ist die Herstellung einer Kabeldurchführung zur Aufnahme von Kabeln oder Kabelbündeln beliebiger Form und beliebigen Durchmessers mit einem einzigen Formwerkzeug möglich. Die mit dem erfindungsgemäßen Formwerkzeug hergestellten Kabeldurchführungen mit Durchführungsöffnungen variablen Querschnitts haben eine einheitliche, durch die Kontur der Formmulde des Formwerkzeugs vorgegebene Umfangskontur und sind somit mittels einer identischen Aufnahme zum Befestigen derselben, z.B. einem Gehäuse, einer Halterung oder dergleichen, insbesondere an einem Roboter festlegbar.

In bevorzugter Ausführung ist vorgesehen, daß die Stifte ein Haltestück zum Festlegen in dichten Passungen des Formwerkzeugs und ein eine Formmulde des Formwerkzeugs durchsetzendes Formstück zur Erzeugung der Durchführungsöffnungen der Kabeldurchführung aufweisen. Die in dem Formwerkzeug ausgeformten dichten Passungen für die Haltestücke der Stifte verhindern ein Austreten von flüssigem Kunststoff aus dem Formwerkzeug. Durch den Querschnitt der die Formmulde des Formwerkzeugs durchsetzenden Formstücke der Stifte ist der Querschnitt der Durchführungsöffnungen der Kabeldurchführung vorgegeben, wobei für Durchführungsöffnungen mit verschiedenem Querschnitt Stifte mit verschiedene Querschnitte aufweisenden Formstücken vorgesehen sind. Formstück und Haltestück der Stifte können einstückig ausgebildet sein, oder verschiedene Formstücke sind auswechselbar am Haltestück, z.B. mittels Schrauben, Bolzen oder dergleichen, befestigbar.

Bevorzugt ist das Haltestück der Stifte im wesentlichen kreiszylindrisch ausgebildet und das Formstück exzentrisch an der Stirnseite des Haltestücks angeordnet. Derart ist auch die Anordnung der Durchführungsöffnungen in der Kabeldurchführung bzw. der Abstand der Durchführungsöffnungen vom Außenumfang der Kabeldurchführung durch Verdrehen des Haltestücks der Stifte in der jeweiligen, ebenfalls im wesentlichen kreiszylindrisch ausgebildeten Passung der Gießform variierbar. Das exzentrisch am Haltestück angeordnete Formstück kann zur Erzeugung von kreisförmigen Durchführungsöffnungen ebenfalls zylindrisch, insbesondere kreiszylindrisch sein oder jede andere beliebige Form haben, z.B. prismenförmig sein.

Zum Festlegen der Haltestücke der Stifte in den Passungen des Formwerkzeugs in der für die jeweilige Kabelführung gewünschten Anordnung ist am Haltestück der Stifte vorzugsweise wenigstens ein, insbesondere mehrere Positionierungsmittel zum Positionieren der Stifte in den Passungen vorgesehen. Das Positionierungsmittel bewahrt das kreiszylindrische Haltestück vor einem Verdrehen in der jeweiligen Passung und dient zum Festlegen des Stiftes in der gewünschten Anordnung des Formstücks. Das Positionierungsmittel kann beispielsweise als ein mit einem ebenen Positionierungsabschnitt der Passung in Verbindung stehender, am Mantel des Haltestücks des Stiftes angeordneter ebener Oberflächenabschnitt ausgebildet sein, oder das Positionierungsmittel ist eine mit einem Vorsprung der Passung in Verbindung stehende, am Mantel des Haltestücks des Stiftes angeordnete Nut. Als Positionierungsmittel kommen selbstverständlich auch beliebige bekannte Mittel in Frage, welche zum Festlegen des zylindrischen Haltestücks des Stiftes in der Passung des Formwerkzeugs in einer vorgegebenen Position geeignet sind.

In bevorzugter Ausführung sind auch ausschließlich aus einem Haltestück bestehende Blindstifte zum Verschließen wenigstens einer Passung des Formwerkzeugs vorgesehen. Auf diese Weise ist die Anzahl der Durchführungsöffnungen der Kabeldurchführung variierbar, indem einige oder mehrere Passungen des erfindungsgemäßen Formwerkzeugs mit Blindstiften verschlossen und in andere Passungen des Formwerkzeugs solche Stifte eingesetzt werden, die ein Formstück zur Erzeugung der Durchführungsöffnungen aufweisen. Die Blindstifte dienen ausschließlich zum dichten Verschließen der Passungen, um einen Austritt von flüssigem Kunststoff aus der Form zu verhindern.

Gemäß einer bevorzugten Ausführung ist vorgesehen, daß das Formwerkzeug zwei Halbzeuge aufweist, wobei an einem Halbzeug die Passungen zum Festlegen der Stifte angeordnet sind. Derart ist der Austausch der Stifte auf einfache Weise dadurch möglich, daß die Stifte in die Passungen des einen Halbzeugs der Form eingesetzt, die Form durch Aufsetzen dieses Halbzeugs auf das andere Halbzeug unter Eingriff der Formstücke der Stifte in die Formmulde aufgesetzt und die Halbzeuge mittels beliebiger bekannter Halteeinrichtungen, z.B. Klammern, fixiert werden.

Um den Querschnitt der Kabeldurchführung optimal zur Aufnahme von Kabeln, Leitungen, Schläuchen oder dergleichen auszunutzen, ist in bevorzugter Ausführung vorgesehen, daß die Passungen um den Umfang der Formmulde verteilt angeordnet sind, wobei beispielsweise zusätzlich eine bezüglich der Formmulde zentral angeordnete Passung vorgesehen sein kann, welche beim Einsetzen eines Stiftes mit einem Formstück für eine zentrale Durchführungsöffnung der Kabeldurchführung sorgt.

Das erfindungsgemäße Formwerkzeug ist vorzugsweise eine zur Verarbeitung thermoplastischer Kunststoffe vorgesehene Gießform, insbesondere eine Spritzgießform. Es kann selbstverständlich auch als Form zur Herstellung von Kabeldurchführungen aus duroplastischen bzw. vernetzten Kunststoffen ausgebildet sein, indem z.B. ein Flüssigharz oder eine Flüssigharzmischung eines duroplastischen oder elastischen Polymers in das Formwerkzeug eingebracht und ausgehärtet wird.

Nachstehend ist die Erfindung anhand einer bevorzugten Ausführungsform unter Bezugnahme auf die Zeichnungen näher erläutert. Es zeigen:
- Fig. 1: eine perspektivische Schnittansicht einer Ausführungsform des erfindungsgemäßen Formwerkzeugs;
- Fig. 2: eine Draufsicht auf das Formwerkzeugs gemäß Fig. 1;
- Fig. 3: einen Längsschnitt A-A gemäß Fig. 2 und
- Fig. 4: eine perspektivische Ansicht eines Stiftes eines erfindungsgemäßen Formwerkzeugs.

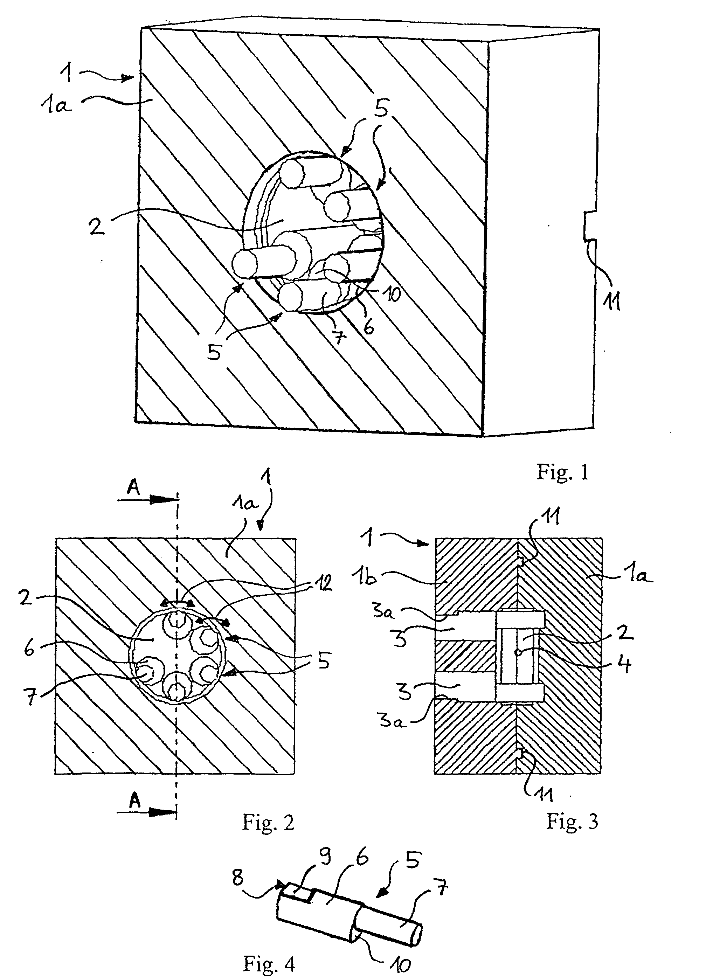

In Fig. 1 ist ein Querschnitt durch ein Halbzeug 1a eines erfindungsgemäßen Formwerkzeugs 1 zur Herstellung von Kabeldurchführungen im Bereich der Formmulde 2 dargestellt. In der gezeigten Ausführung weist die Formmulde 2 eine kreisförmige Kontur auf. Je nach gewünschter Umfangskontur der Kabeldurchführung kann die Formmulde 2 auch eine beliebige andere Kontur haben, z.B. mehreckig, oval, U-förmig oder dergleichen sein. In dem Formwerkzeug 1 sind die Formmulde 2 durchsetzende, austauschbare Stifte 5 angeordnet, die zur Erzeugung der Durchführungsöffnungen der Kabeldurchführung dienen. Die Stifte 5 weisen ein Haltestück 6 zum Festlegen in dichten Passungen eines (nicht dargestellten) zweiten Halbzeugs des Formwerkzeugs 1 sowie ein in die Formmulde 2 eingreifendes Formstück 7 auf. In der dargestellten Ausführung dient der runde Querschnitt der kreiszylindrischen Formstücke 7 der Stifte 5 zur Erzeugung von runden Durchführungsöffnungen. Durch die Verwendung von Stiften 5 mit verschiedenen Formstücken 7, z.B. zylindrischen Formstücken mit rundem oder ovalem Querschnitt verschiedenen Durchmessers oder auch mit mehreckigem Querschnitt, ist somit die Herstellung von Kabeldurchführungen mit einer der Kontur der Formmulde 2 entsprechenden Umfangskontur möglich, welche mit beliebigen Durchführungsöffnungen ausgestattet sind.

Wie auch aus Fig. 2 ersichtlich, sind die die Formmulde 2 des (geschnitten dargestellten) Formwerkzeugs 1 durchsetzenden Formstücke 7 der Stifte 5 exzentrisch an der Stirnseite 10 von kreiszylindrischen Haltestücken 6 angeordnet. Derart ist durch Drehen der Stifte 5 in Richtung Pfeil 12 die Anordnung der Durchführungsöffnungen in der Kabeldurchführung bzw. der Abstand der Durchführungsöffnungen vom Umfang der Kabeldurchführung variierbar. In der gezeigten Ausführung sind die Stifte 5 zur Erzeugung randseitiger Durchführungsöffnungen um den Umfang der Formmulde 2 verteilt angeordnet. Alternativ oder zusätzlich kann ein oder können mehrere (nicht dargestellte), bezüglich der Formmulde 2 im wesentlichen zentral angeordnete Stifte 5 vorgesehen sein. Ebenfalls können ausschließlich aus einem Haltestück 6 bestehende (nicht dargestellte) Blindstifte vorgesehen sein, die zum Verschließen der an dem Formwerkzeug 1 angeordneten Passungen dienen, falls weniger als die der Anzahl der Passungen entsprechenden maximal möglichen Anzahl von Durchführungsöffnungen in der Kabeldurchführung erwünscht sind.

Fig. 3 ist ein Längsschnitt durch das aus zwei Halbzeugen 1a, 1b bestehende Formwerkzeug 1 in Form einer Spritzgießform gezeigt, wobei ein Schmelzekanal 4 die Injektion eines schmelzflüssigen oder plastifizierten Kunststoffmaterials in die Form 1 gewährleistet. Eine Zentriereinrichtung 11 sorgt in bekannter Weise für ein Verschließen der Form 1 unter kongruenter Anordnung der Halbzeuge 1a, 1b. Das Halbzeug 1b des Formewerkzeugs 1 weist dichte kreiszylindrische Passungen 3 zur Aufnahme der Stifte 5 (Fig. 4) auf, so daß ein Austritt der Kunststoffschmelze aus der Form 1 von den in die Passungen 3 einbringbaren Haltestücke 6 der Stifte 5 zuverlässig vermieden wird.

Wie aus Fig. 4 ersichtlich, ist am Haltestück 6 der Stifte 5 ein Positionierungsmittel 8 zum Positionieren der Stifte 5 in den Passungen 3 vorgesehen, welches in der gezeigten Ausführungsform als ein am Mantel des Haltestücks 6 des Stiftes 5 angeordneter, ebener Oberflächenabschnitt 9 ausgebildet ist. Der ebene Oberflächenabschnitt 9 steht nach Einbringen des Stiftes 5 in die Passung 3 des Halbzeugs 1b mit einem ebenen Positionierungsabschnitt 3a der Passung 3 in Verbindung, um den Stift 5 unter der gewünschten Anordnung des Formstücks 7 drehfest in der Passung 3 festzulegen (Fig. 3). Es können insbesondere mehrere, um den Mantel des Haltestücks 6 des Stiftes 5 verteilt angeordnete Positionierungsmittel 8 und/oder mehrere, um den Umfang der Passung 3 angeordnete Positionierungsabschnitte 3a vorgesehen sein, um für eine variierbare Anordnung der Stifte 5 in den Passungen 3 und somit der Durchführungsöffnungen der Kabeldurchführung zu sorgen. Der maximal mögliche Durchmesser des Formstücks 7 des Stiftes 5 entspricht bei der gezeigten, um den Umfang der Formmulde 2 verteilten Anordnung der Stifte 5 dem Durchmesser des Haltestücks 6. Der Stift 5 kann einstückig ausgebildet sein, oder das Formstück 7 ist am Haltestück 6 durch beliebige Mittel, z.B. Schrauben, Bolzen oder dergleichen, befestigbar.

### Bezugszeichenliste

- 1: Formwerkzeug
- 1a,1b: Halbzeuge des Formwerkzeugs
- 2: Formmulde
- 3: Passung
- 3a: Positionierungsabschnitt
- 4: Schmelzekanal
- 5: Stift
- 6: Haltestück
- 7: Formstück
- 8: Positionierungsmittel
- 9: ebener Oberflächenabschnitt des Haltestücks
- 10: Stirnseite des Haltestücks
- 11: Zentriereinrichtung

## Patentansprüche

1. Formwerkzeug zur Herstellung von Formteilen aus Kunststoff mit mehreren Durchführungsöffnungen, wobei das Formwerkzeug mindestens einen entfernbaren Einsatz aufweist, **dadurch gekennzeichnet, dass** zur Herstellung von die Durchführungsöffnungen zur Aufnahme von Kabeln aufweisenden Kabeldurchführungen als Formteilen mehrere Einsätze in Form von einzelnen in Passungen (3) gehaltenen austauschbaren Stiften (5) vorgesehen sind.

2. Formwerkzeug nach Anspruch 1, **dadurch gekennzeichnet, dass** die Stifte (5) ein Haltestück (6) zum Festlegen in dichten Passungen (3) des Formwerkzeugs (1) und ein eine Formmulde (2) des Formwerkzeugs (1) durchsetzendes Formstück (7) zur Erzeugung der Durchführungsöffnungen der Kabeldurchführung aufweisen.

3. Formwerkzeug nach Anspruch 2, **dadurch gekennzeichnet, dass** das Haltestück (6) der Stifte (5) kreiszylindrisch ausgebildet und das Formstück (7) exzentrisch an der Stirnseite (10) des Haltestücks (6) angeordnet ist.

4. Formwerkzeug nach Anspruch 3, **dadurch gekennzeichnet, daß** am Haltestück (6) der Stifte (5) wenigstens ein Positionierungsmittel (8) zum Positionieren der Stifte (5) in den Passungen (3) vorgesehen ist.

5. Formwerkzeug nach Anspruch 4, **dadurch gekennzeichnet, daß** das Positionierungsmittel (8) ein mit einem ebenen Positionierungsabschnitt (3a) der Passung (3) in Verbindung stehender, am Mantel des Haltestücks (6) des Stiftes (5) angeordneter ebener Oberflächenabschnitt (9) ist.

6. Formwerkzeug nach Anspruch 4, **dadurch gekennzeichnet, daß** das Positionierungsmittel (8) eine mit einer Vorsprung der Passung (3) in Verbindung stehende, am Mantel des Haltestücks (6) des Stiftes (5) angeordnete Nut ist.

7. Formwerkzeug nach Anspruch 1, **dadurch gekennzeichnet, daß** ausschließlich aus einem Haltestück (6) bestehende Blindstifte zum Verschließen wenigstens einer Passung (3) des Formwerkzeugs (1) vorgesehen sind.

8. Formwerkzeug nach einem der Ansprüche 1 bis 7, **dadurch gekennzeichnet, daß** es zwei Halbzeuge (1a, 1b) aufweist, wobei an einem Halbzeug (1b) die Passungen (3) zum Festlegen der Stifte (5) angeordnet sind.

9. Formwerkzeug nach einem der Ansprüche 1 bis 8, **dadurch gekennzeichnet, daß** die Passungen (3) um den Umfang der Formmulde (2) verteilt angeordnet sind.

10. Formwerkzeug nach einem der Ansprüche 1 bis 9, **dadurch gekennzeichnet, daß** es eine Gießform, insbesondere eine Spritzgießform, ist.

## Claims

1. Mould for producing mouldings from plastic with several duct openings, in which the mould has at least one removable insert, **characterized in that** for the production of the cable ducts having the duct openings for the reception of cables in the form of mouldings, several inserts in the form of replaceable pins (5) held in fits (3) are provided.

2. Mould according to claim 1, **characterized in that** the pins (5) have a holding member (6) for fixing in tight fits (3) of the mould (1) and a fitting (7) passing through a depression (2) of the mould (1) for producing the duct openings of the cable duct.

3. Mould according to claim 2, **characterized in that** the holding member (6) of the pins (5) has a circular cylindrical construction and the fitting (7) is positioned eccentrically on the end face (10) of the holding member (6).

4. Mould according to claim 3, **characterized in that** on the holding member (6) of the pins (5) is provided at least one positioning means (8) for positioning the pins (5) in the fits (3).

5. Mould according to claim 4, **characterized in that** the positioning means (8) is a planar surface portion (9) connected to a planar positioning portion (3a) of the fit (3) and located on the jacket of the holding member (6) of the pin (5).

6. Mould according to claim 4, **characterized in that** the positioning means (8) is a groove connected to a projection of the fit (3) and located on the jacket of the holding member (6) of the pin (5).

7. Mould according to claim 1, **characterized in that** lined pins exclusively comprising a holding member (6) are provided for closing at least one fit (3) of the mould (1).

8. Mould according to one of the claims 1 to 7, **characterized in that** it has two semifinished parts (1a, 1b), the fits (3) for fixing the pins (5) being located on one semifinished part (1b).

9. Mould according to one of the claims 1 to 8, **characterized in that** the fits (3) are distributed round the circumference of the depression (2).

10. Mould according to one of the claims 1 to 9, **characterized in that** it is a casting mould, particularly an injection mould.

## Revendications

1. Outil de formage pour la production de pièces de moule en matière synthétique à plusieurs ouvertures de passage, l'outil de formage présentant au moins un insert amovible, **caractérisé en ce que** l'on prévoit comme pièces de moule plusieurs inserts en forme de broches (5) individuelles interchangeables maintenues dans des passages ajustés (3) pour la conformation de traversées de câbles présentant les ouvertures de passage pour la réception de câbles.

2. Outil de formage selon la revendication 1, **caractérisé en ce que** les broches (5) présentent une pièce de maintien (6) pour leur fixation dans des passages ajustés (3) étanches de l'outil de formage (1) et une pièce de formage (7) entrant dans un creux (2) de l' outil de formage (1) pour réaliser les ouvertures de passage de la traversée de câble.

3. Outil de formage selon la revendication 2, **caractérisé en ce que** la pièce de maintien (6) des broches (5) est conformée en cylindre circulaire et **en ce que** la pièce de formage (7) est disposée excentrée sur la face frontale (10) de la pièce de maintien (6).

4. Outil de formage selon la revendication 3, **caractérisé en ce qu'**au moins un moyen de positionnement (8) pour la mise en place des broches (5) dans les passages ajustés (3) est prévu sur la pièce de maintien (6) des broches (5).

5. Outil de formage selon la revendication 4, **caractérisé en ce que** le moyen de positionnement (8) est constitué par une zone plate (9) de la surface présente sur l'enveloppe de la pièce de maintien (6) de la broche (5) et se trouvant en liaison avec un méplat de positionnement (3a) du passage ajusté (3).

6. Outil de formage selon la revendication 4, **caractérisé en ce que** le moyen de positionnement (8) est constitué par une gorge ménagée dans l'enveloppe de la pièce de maintien (6) de la broche (5) et se trouvant en liaison avec une saillie du passage ajusté (3).

7. Outil de formage selon la revendication 1, **caractérisé en ce que** l'on prévoit pour l'obturation d'au moins un passage ajusté (3) de l'outil de formage (1) uniquement une broche borgne consistant en une pièce de maintien (6).

8. Outil de formage selon l'une quelconque des revendications 1 à 7, **caractérisé en ce qu'**il présente deux demi-ensembles (1a, 1b), les passages ajustés (3) pour la fixation des broches (5) étant disposés sur un demi-ensemble (1b).

9. Outil de formage selon l'une quelconque des revendications 1 à 8, **caractérisé en ce que** les passages ajustés (3) sont disposés répartis sur la périphérie de la cavité de formage (2).

10. Outil de formage selon l'une quelconque des revendications 1 à 9, **caractérisé en ce qu'**il est constitué par un moule, en particulier un moule d'injection.
